# EUROPEAN PATENT APPLICATION

(11) **EP 4 825 649 A1**
(43) Date of publication of application: **21.10.2026**
(21) Application number: 25219955.9
(22) Date of filing: 02.12.2025
(51) Int. Cl.: B60L 58/12, B60L 3/00, B60L 3/12, B60L 53/66, B60L 58/10

(54) **ELECTRIC VEHICLE**

(30) Priority: 15.04.2025 JP 2025066742
(71) Applicant: Kubota Corporation, Osaka-shi, Osaka 530-0011 (JP)
(72) Inventor: IKEMOTO, Shotaro, SAKAI-SHI, OSAKA, 5900908 (JP); MIYAKE, Yuichi, SAKAI-SHI, OSAKA, 5900908 (JP); MATSUO, Hiroyuki, SAKAI-SHI, OSAKA, 5900908 (JP)
(74) Representative: Cabinet Beau de Loménie

(57) **Abstract**

An electric vehicle includes: a rechargeable travel battery (10) configured to supply electric power to a travel motor (11); a remaining battery capacity calculator (41a) configured to calculate a remaining battery capacity of the travel battery (10); and a notification control unit (43) configured to control notification of a notification device (51, 52) that gives notification of a remaining battery capacity. If the calculated remaining battery capacity is within a predetermined upper limit percentage range, the notification device (51, 52) gives notification that the remaining battery capacity is 100% regardless of whether the electric vehicle is charging or traveling. If the calculated remaining battery capacity is within a predetermined lower limit percentage range, the notification device (51, 52) gives notification that the remaining battery capacity is 0%.

## Description

### BACKGROUND OF THE INVENTION

### 1. Field of the Invention

The present invention relates to an electric vehicle that travels using power from a travel motor, and relates particularly to an electric vehicle that includes: a rechargeable travel battery configured to supply electric power to the travel motor; a remaining battery capacity calculator configured to calculate a remaining battery capacity of the travel battery; a display unit configured to display the remaining battery capacity; and a notification control unit configured to control the display of the display unit.

### 2. Description of the Related Art

JP 2024-148538A discloses a work vehicle that includes a travel motor configured to drive travel wheels, a work machine motor configured to drive a work machine, a controller configured to control the driving of the travel motor and the work machine motor, and a display unit configured to display a state of charge of a battery. This work vehicle is provided with a drive mode, which is a mode for driving using the travel motor and the work machine motor, and a charge mode, which is a mode for charging the battery. In the drive mode, a displayed state of charge is 0 if the actual remaining battery capacity is below a first lower limit value, and is 100 if the actual remaining battery capacity is above a first upper limit value. In the charge mode, the displayed state of charge is 0 if the actual remaining of the battery is below a second lower limit value, and is 100 if the actual remaining battery capacity is above a second upper limit value.

JP 2024-148538A is an example of related art.

### SUMMARY OF THE INVENTION

In the work vehicle according to JP 2024-148538A, the display form of the calculated actual remaining battery capacity on the display unit is changed in accordance with the operation mode and the charge mode, thereby displaying a proper remaining battery capacity for each mode. This type of display form is effective when one display unit displays both the remaining battery capacity in the charge mode and the remaining battery capacity in the drive mode in which the travel motor and the work machine motor are used and thus a large amount of electric power is consumed. However, the cost of display control may wastefully increase in the case where no work machine motor is mounted or only a work machine motor with low power consumption is mounted.

In view of this, the present invention aims to provide an electric vehicle having a remaining battery capacity display function with simpler display control with which issues caused by overcharge and over-discharge can be avoided.

### Means for Solving a Problem

An electric vehicle configured to travel with use of power from a travel motor according to an aspect of the present invention includes: a rechargeable travel battery configured to supply electric power to the travel motor; a remaining battery capacity calculator configured to calculate a remaining battery capacity of the travel battery; a notification device configured to give notification of the remaining battery capacity; and a notification control unit configured to control the notification of the notification device. If the remaining battery capacity calculated by the remaining battery capacity calculator is within a predetermined upper limit percentage range, the notification device gives notification that the remaining battery capacity is 100% regardless of whether the electric vehicle is charging or traveling, and if the remaining battery capacity calculated by the remaining battery capacity calculator is within a predetermined lower limit percentage range, the notification device gives notification that the remaining battery capacity is 0% regardless of whether the electric vehicle is charging or traveling.

According to this configuration, if the remaining battery capacity calculated by the remaining battery capacity calculator, i.e., the actual remaining battery capacity is within a predetermined upper limit percentage range, the notification device gives notification that the remaining battery capacity is 100%. This allows a driver or the like to recognize that the battery is sufficiently charged before it is fully charged (i.e., the actual remaining battery capacity reaches 100%). Thus, for example, the risk of overcharge during charging with a charger or of overcharge due to regenerative braking is reduced. Also, if the remaining battery capacity calculated by the remaining battery capacity calculator, i.e., the actual remaining battery capacity is within the predetermined lower limit percentage range, the notification device gives notification that the remaining battery capacity is 0%. This allows the driver or the like to recognize that over-discharge is imminent before the battery is over-discharged (i.e., the actual remaining battery capacity is 0%), and reduces the risk of over-discharge. That is, display control for the remaining battery capacity common to charging and traveling reduces the possibility of using the travel battery due to overcharge and over-discharge, and suppresses deterioration of the battery life. Note that the notification method may be, for example, a visual, audio, or vibration warning provided respectively by a display unit, a speaker or the like, or a vibration device. Note that, here, the actual remaining battery capacity calculated by the remaining battery capacity calculator represents a proportion based on the premise that the remaining battery capacity is 100% when fully charged, and is 0% when fully discharged. Also, the term "%" is used, but any unit may be used as long as it represents a proportion. As used herein, the term "%" is generic to such unit and is not intended to limit the unit in the present invention to %.

While the remaining battery capacity is at a level where overcharge or over-discharge is not possible, it is preferable to notify the driver or the like of the remaining battery capacity as accurately as possible. In view of this, the present invention also proposes that if the remaining battery capacity calculated by the remaining battery capacity calculator is between the predetermined upper limit percentage range and the predetermined lower limit percentage range, the notification device gives notification of the remaining battery capacity calculated by the remaining battery capacity calculator.

If the remaining battery capacity is within the predetermined upper limit percentage range, overcharge can occur, and it is therefore necessary to avoid a situation where the battery is further charged. For example, it is convenient to execute an avoidance operation, such as issuing a warning about stopping charging at a charging station or stopping regenerative charging, or issuing an instruction to automatically stop such charging. In view of this, the present invention, also proposes that if the remaining battery capacity is within the predetermined upper limit percentage range, an operation related to prohibiting charging of the travel battery is executed.

If the remaining battery capacity is within the predetermined lower limit percentage range, over-discharge can occur, and it is therefore necessary to avoid a situation where the battery is further discharged. That is, it is convenient to take measures such as refraining from further traveling, switching to lowest-speed traveling, or switching to traveling with consideration given to regenerative charging (travel-prohibiting operation including travel-limiting operation). In view of this, the present invention also proposes that if the remaining battery capacity is within the predetermined lower limit percentage range, an operation related to prohibiting traveling is executed.

The predetermined upper and lower limit percentage ranges are used as thresholds based on which normal work travel is interrupted, and therefore, the setting of these ranges (predetermined percentages) is important. However, proper ranges may vary depending on the use mode of the work vehicle, the driver's preference, or the like. In view of this, the present invention also proposes that at least either the predetermined upper limit percentage range or the predetermined lower limit percentage range is changeable by a driver.

### BRIEF DESCRIPTION OF THE DRAWINGS

FIG. 1 is a left side view of an electric vehicle.
FIG. 2 is a plan view of the electric vehicle.
FIG. 3 is a functional block diagram showing functional units related to power transmission control and remaining battery capacity notification control.
FIG. 4 is a front view of a meter panel.
FIG. 5 is a schematic diagram illustrating the relationship between an actual remaining battery capacity and a displayed remaining battery capacity.
FIG. 6 is a flowchart showing an example of remaining battery capacity display processing.

### DETAILED DESCRIPTION OF PREFERRED EMBODIMENTS

A mode for carrying out the present invention will be described with reference to the drawings. Note that in the following description, the direction of the arrow F and the direction of the arrow B in the drawings correspond to the front and rear, respectively. The direction of the arrow L and the direction of the arrow R correspond to the left and right, respectively, unless otherwise specified. The direction of the arrow U and the direction of the arrow D in the drawings correspond to up and down, respectively.

### Overall configuration of electric vehicle

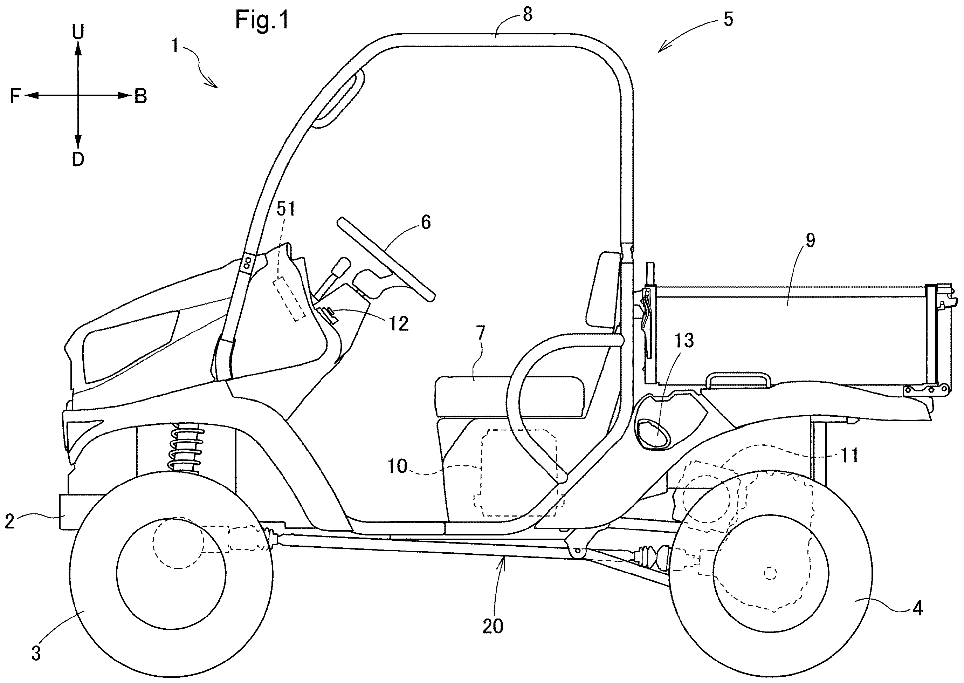

An electric vehicle 1 shown in FIG. 1 is a multi-purpose vehicle (utility vehicle). As shown in FIG. 1, the electric vehicle 1 has a body frame 2, left and right front wheels 3, and left and right rear wheels 4. The body frame 2, the left and right front wheels 3, and the left and right rear wheels 4 are located at lower portions of the vehicle body (machine body) of the electric vehicle 1.

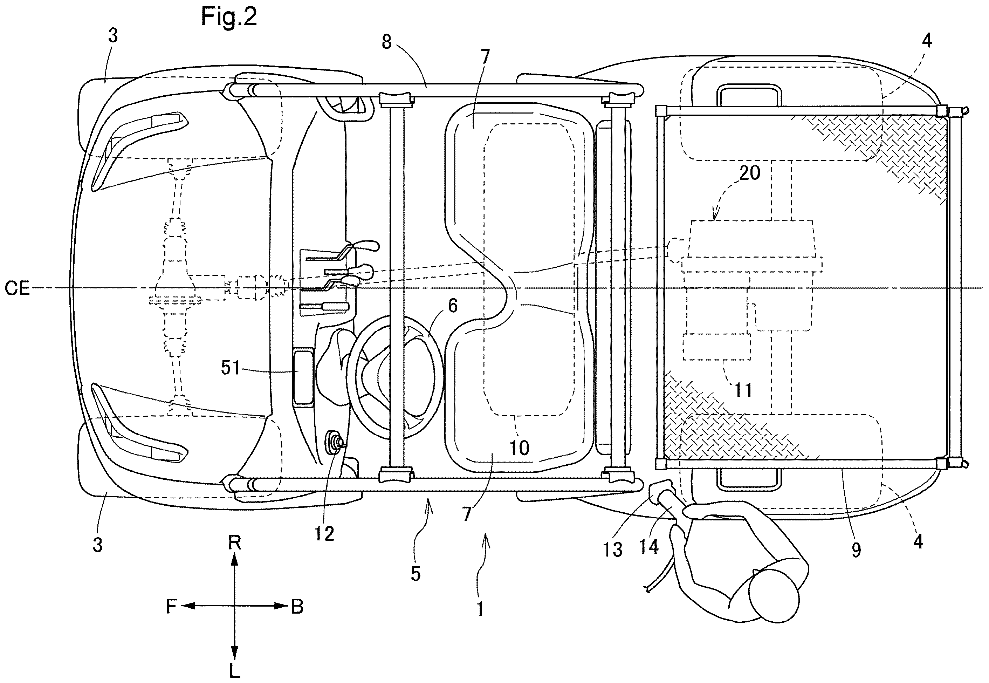

As shown in FIGS. 1 and 2, the electric vehicle 1 has a driving section 5 in which a user (a driver or a worker) can ride, at a center portion in the front-rear direction. The driving section 5 has a steering wheel 6 and left and right seats 7. In the present embodiment, the left and right seats 7 are integrated.

The steering wheel 6 is disposed in front of the left seat 7. Users can sit in the left and right seats 7. A user sitting in the left seat 7 can steer the electric vehicle 1 by operating the steering wheel 6.

The driving section 5 has a protective frame 8. The protective frame 8 constitutes a rollover protective structure (ROPS). The protective frame 8 is supported by the body frame 2. The protective frame 8 surrounds a riding space in the driving section 5 (i.e., a space in the vicinity of the steering wheel 6 and the left and right seats 7, or a space therearound).

The electric vehicle 1 has a cargo bed 9. The cargo bed 9 is located rearward of the driving section 5. The cargo bed 9 can carry objects to be transported (loads such as straw or agricultural crops).

As shown in FIG. 1, the electric vehicle 1 includes a travel battery 10 and a travel motor 11. The travel battery 10 and the travel motor 11 are both supported by the body frame 2. The travel battery 10 is located below the left and right seats 7. The travel motor 11 is located below the cargo bed 9.

The travel battery 10 is electrically connected to the travel motor 11. The travel motor 11 is driven by electric power supplied from the travel battery 10.

The driving force from the travel motor 11 is transmitted to the left and right front wheels 3 and the left and right rear wheels 4 via a power transmission mechanism 20. As a result, the left and right front wheels 3 and the left and right rear wheels 4 are driven. The electric vehicle 1 can thereby travel using the left and right front wheels 3 and the left and right rear wheels 4.

As shown in FIG. 2, a key switch 12 and a meter panel 51 (which is one example of a "notification device" according to the present invention) are provided in the driving section 5. The key switch 12 and the meter panel 51 are located in front of the left seat 7.

The electric vehicle 1 is switchable between a key-OFF state and a key-ON state in response to a manual operation of the key switch 12. More specifically, a key can be inserted into the key switch 12. The user can operate the key switch 12 by turning (rotating) the key inserted in the key switch 12. The electric vehicle 1 enters the key-OFF state in response to the key switch 12 being turned to an OFF position. The electric vehicle 1 enters the key-on state in response to the key switch 12 being turned to an ON position.

While the electric vehicle 1 is in the key-ON state, the travel motor 11 can be driven. That is, the electric vehicle 1 can travel at this time.

While the electric vehicle 1 is in the key-OFF state, the travel motor 11 cannot be driven. That is, the electric vehicle 1 cannot travel at this time.

The meter panel 51 faces the left seat 7. In other words, the meter panel 51 is directed toward the rear side of the vehicle body (machine body) of the electric vehicle 1.

The meter panel 51 is capable of displaying various information such as the current vehicle speed and the remaining battery capacity of the electric vehicle 1. The meter panel 51 turns on in response to the electric vehicle 1 switching from the key-OFF state to the key-ON state. The meter panel 51 turns off in response to the electric vehicle 1 switching from the key-ON state to the key-OFF state. Note that the ON state refers to a state in which various information is displayed, and the OFF state refers to a state in which nothing is displayed.

Thus, the electric vehicle 1 has the meter panel 51 provided in the driving section 5 as a notification device. Although not specifically limited, the meter panel 51 may be a liquid crystal display or an organic electro luminescence (EL) display, or may include one or more analog meters.

### Power supply unit

As shown in FIGS. 1 and 2, the electric vehicle 1 includes a power supply unit 13. The power supply unit 13 is located at a rear left end portion of the electric vehicle 1. The power supply unit 13 is electrically connected to the travel battery 10 via a power supply harness (not shown).

As shown in FIG. 2, a charger 14 provided in a charging facility or the like can be connected to the power supply unit 13. The standard of the charger 14 and the power supply unit 13 is not specifically limited, and may be, for example, CHAdeMO. The charger 14 is not included in the electric vehicle 1.

Electric power is supplied to the travel battery 10 in response to the charger 14 being connected to the power supply unit 13. The travel battery 10 is thereby charged.

As described above, the electric vehicle 1 includes the power supply unit 13 to which the charger 14 can be connected and that is electrically connected to the travel battery 10.

A center line CE is shown in FIG. 2. The center line CE indicates the center position in the left-right direction of the electric vehicle 1. As shown in FIG. 2, the steering wheel 6, the left seat 7, the key switch 12, the meter panel 51, and the power supply unit 13 are located to the left of the center line CE.

That is, the steering wheel 6, the left seat 7, the key switch 12, the meter panel 51, and the power supply unit 13 are located on the same side of the center position in the left-right direction of the vehicle body. In particular, the power supply unit 13 and the meter panel 51 are located on the same side of the center position in the left-right direction of the vehicle body. Further, as shown in FIG. 2, the power supply unit 13 is located to the rear of the meter panel 51.

When the user connects the charger 14 to the power supply unit 13, the user is positioned to the left of a rear portion of the electric vehicle 1, as shown in FIG. 2. The electric vehicle 1 is configured such that no member blocks the user's line of sight toward the meter panel 51 while the user is standing in this position (the standing position of the user when connecting the charger 14).

### Power transmission system

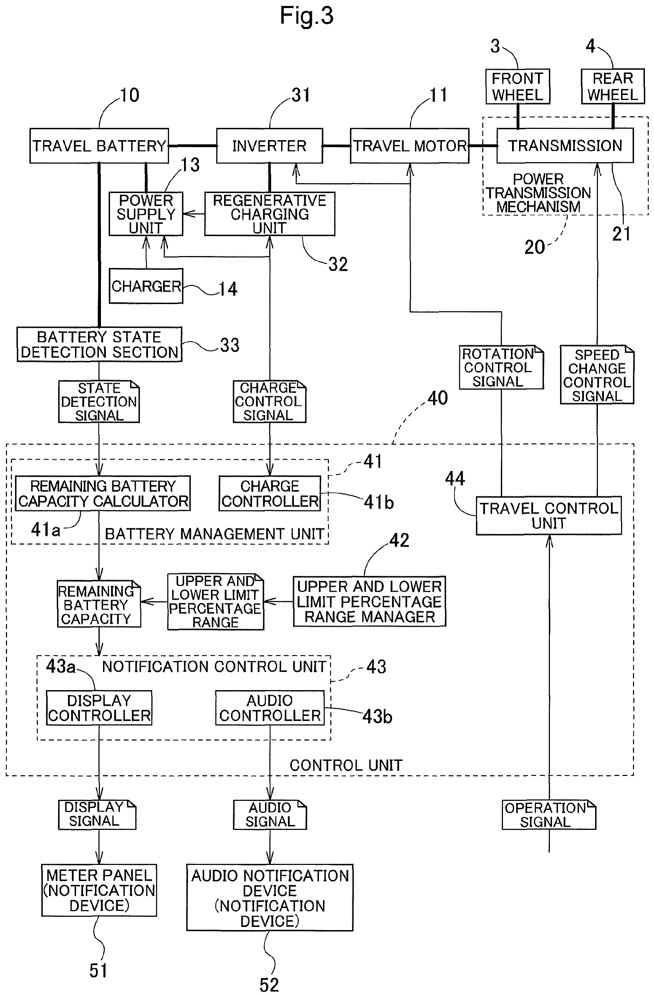

As shown in FIG. 3, the electric vehicle 1 includes, as a power system, the travel battery 10, an inverter 31, the travel motor 11, and the power transmission mechanism 20.

The inverter 31 converts DC power from the travel battery 10 into AC power and generates electric power for travel to be supplied to the travel motor 11. The electric power for travel is AC power generated by the inverter 31. The electric vehicle 1 includes a regenerative charging unit 32. In response to shifting from a power-traveling state in which the travel motor 11 rotates the wheels (the front wheels 3 and the rear wheels 4) to a regenerating state in which the travel motor 11 is rotated by the wheels, the regenerative charging unit 32 functions to use the regenerated energy to charge the travel battery 10. Note that the regenerative charging unit 32 can stop the regenerative charging function while the travel battery 10 does not need to be charged.

The power transmission mechanism 20 includes a transmission 21 to which rotational power output from the travel motor 11 is input, and an output from the transmission 21 is distributed to the front wheels 3 and the rear wheels 4. The transmission 21 may include a hydraulic transmission mechanism or a gear-type transmission mechanism.

Further, a battery state detection section 33 for detecting the battery state is provided. The battery state detection section 33 includes a battery voltage detector and a battery temperature detector, and outputs a state detection signal indicative of the battery state, which is used to calculate a remaining battery capacity.

### Remaining battery capacity display control

Remaining battery capacity display control is performed by a control unit 40. For this purpose, the control unit 40 includes a battery management unit 41, an upper and lower limit percentage range manager 42, and a notification control unit 43.

The battery management unit 41 includes a remaining battery capacity calculator 41a and a charge controller 41b. The remaining battery capacity calculator 41a calculates a remaining battery capacity of the travel battery 10 based on the state detection signal sent from the battery state detection section 33.

The charge controller 41b outputs a charge control signal to charge the travel battery 10 via the charger 14 attached to the power supply unit 13, and to regeneratively charge the travel battery 10 using the regenerative charging unit 32. The charge controller 41b functions to stop the charging through the charger 14 and the regenerative charging. Although not shown, the battery management unit 41 also functions to control discharging of the travel battery 10.

For the display of the remaining battery capacity according to the present invention, if the remaining battery capacity calculated by the remaining battery capacity calculator 41a is within a predetermined upper limit percentage range, the user is notified that the remaining battery capacity is 100% regardless of whether the electric vehicle 1 is charging or traveling. Meanwhile, if the remaining battery capacity calculated by the remaining battery capacity calculator 41a is within a predetermined lower limit percentage range, the user is notified that the remaining battery capacity is 0%.

Note that an actual remaining battery capacity that is theoretically calculated by the remaining battery capacity calculator 41a indicates a proportion between 100%, which is the remaining battery capacity when the battery is fully charged, and 0%, which is the remaining battery capacity when the battery is completely discharged. Although the term "%" is used here, any unit may also be used as long as it represents a proportion. As used herein, the term "%" is generic to such a unit and is not intended to limit the unit in the present invention to %. If the predetermined percentage range for the predetermined upper limit percentage range is, for example, 10%, this predetermined upper limit percentage range means an uppermost 10% range, i.e., a range of 100% to 90%. If the predetermined percentage range for the predetermined lower limit percentage range is, for example, 10%, this predetermined lower limit percentage range means a lowermost 10% range, i.e., a range of 0% to 10%.

The upper and lower limit percentage range manager 42 manages the predetermined upper and lower limit percentage ranges. If the remaining battery capacity calculated by the remaining battery capacity calculator is included in either the predetermined upper or lower limit percentage range, the upper and lower limit percentage range manager 42 assigns a tag (flag) of the predetermined upper or lower limit percentage range to the calculated remaining battery capacity. The predetermined upper and lower limit percentage ranges may be changeable by the user or a vehicle administrator.

The notification control unit 43 includes a display controller 43a that outputs information to be notified to the user as visual information, and an audio controller 43b that outputs information to be notified to the user as audio information. The display controller 43a converts information to be notified to the user into a display signal, and supplies the display signal to the meter panel 51, which is one example of the notification device. The audio controller 43b converts information to be notified to the user into an audio signal, and gives the audio signal to an audio notification device 52, such as a buzzer or a speaker, which is one example of the notification device.

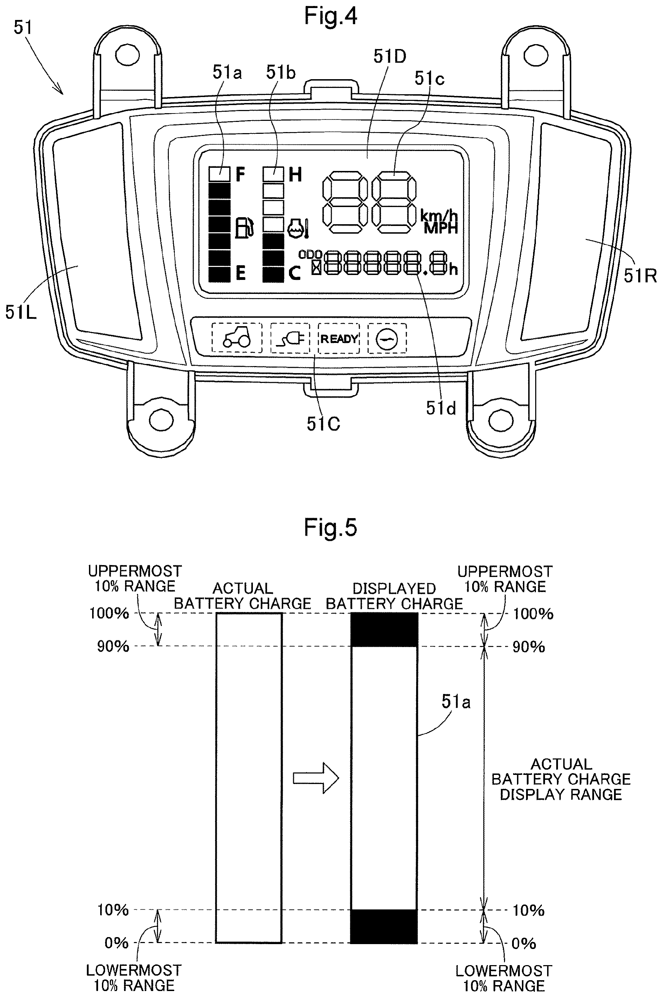

As shown in FIG. 4, the meter panel 51 is configured as a display unit that notifies the driver of various types of information. The meter panel 51 includes a left LED display section 51L, a right LED display section 51R, a center LED display section 51C, and a liquid crystal display section 51D.

Each of the left and right LED display sections 51L and 51R includes an LED indicator for displaying a vehicle state. The center LED display section 51C includes an LED indicator for displaying start permission, a charging state, or the like.

The liquid crystal display section 51D includes a remaining battery capacity display region 51a, a battery temperature display region 51b, a rotational speed display region 51c, a multi-purpose display region 51d, and so on. The remaining battery capacity display region 51a is formed as a segment bar graph, and is used as a remaining battery indicator for displaying the remaining battery capacity of the travel battery 10 stepwise. The battery temperature display region 51b is also formed as a segment bar graph, and is used as a battery temperature indicator for displaying the battery temperature of the travel battery 10 stepwise. The rotational speed display region 51c and the multi-purpose display region 51d are seven-segment displays that are generally used for digital numerical display. The multi-purpose display region 51d is usually used as an hour meter or a per-travel battery consumption meter, and also displays an error code in response to the occurrence of an error.

If the predetermined upper limit percentage range tag is attached to the remaining battery capacity calculated by the remaining battery capacity calculator 41a, i.e., if the actual remaining battery capacity is within the predetermined upper limit percentage range, the display controller 43a displays the segment bar graph in the remaining battery capacity display region 51a so as to notify the user that the remaining battery capacity is 100%. On the other hand, if the predetermined lower limit percentage range tag is attached to the remaining battery capacity calculated by the remaining battery capacity calculator 41a, the display controller 43a displays the segment bar graph in the remaining battery capacity display region 51a so as to notify the user that the remaining battery capacity is 0%.

FIG. 5 shows one specific example of the relationship between the actual remaining battery capacity and the displayed remaining battery capacity. In the example of FIG. 5, the predetermined upper limit percentage range is set to the uppermost 10% range, and the predetermined lower limit percentage range is set to the lowermost 10% range. The left bar graph shows the actual remaining battery capacity, and the right bar graph is the bar graph in the remaining battery capacity display region 51a. As is clear from FIG. 5, if the actual remaining battery capacity is within the uppermost 10% range, i.e., if the actual remaining battery capacity is in the range (uppermost 10% range) from 100% (full charge) and 90%, it is displayed that the current remaining battery capacity is 100% (full charge). In the example of FIG. 5, the uppermost segment indicating a full charge flashes (or lights in a specific color, such as red or blue) in the segment bar graph. On the other hand, if the actual remaining battery capacity is in the range (lowermost 10% range) from 0% (over-discharge) and 10%, it is displayed that the current remaining battery capacity is 0% (over-discharge). In the example of FIG. 5, the lowermost segment indicating an over-discharge flashes (or lights in a specific color such as red or blue) in the segment bar graph. Note that if the actual remaining battery capacity is between the uppermost 10% range and the lowermost 10% range, i.e., if the actual remaining battery capacity is between 90% and 10%, the actual remaining battery capacity is displayed in the bar graph in the remaining battery capacity display region 51a. In the case where the remaining battery capacity display region 51a is a segment bar graph, the remaining battery capacity is displayed in segments such that a segment corresponding to the actual remaining battery capacity is a boundary.

In the case where the audio controller 43b gives audio notification of the remaining battery capacity, as in the remaining battery capacity display by the display controller 43a, notification is given that the battery is fully charged if the actual remaining battery capacity is within the uppermost 10% range, and notification is given that the battery is over-discharged if the actual remaining capacity is within the lowermost 10% range. If the actual remaining battery capacity is between 90% and 10%, notification of the actual remaining battery capacity is given.

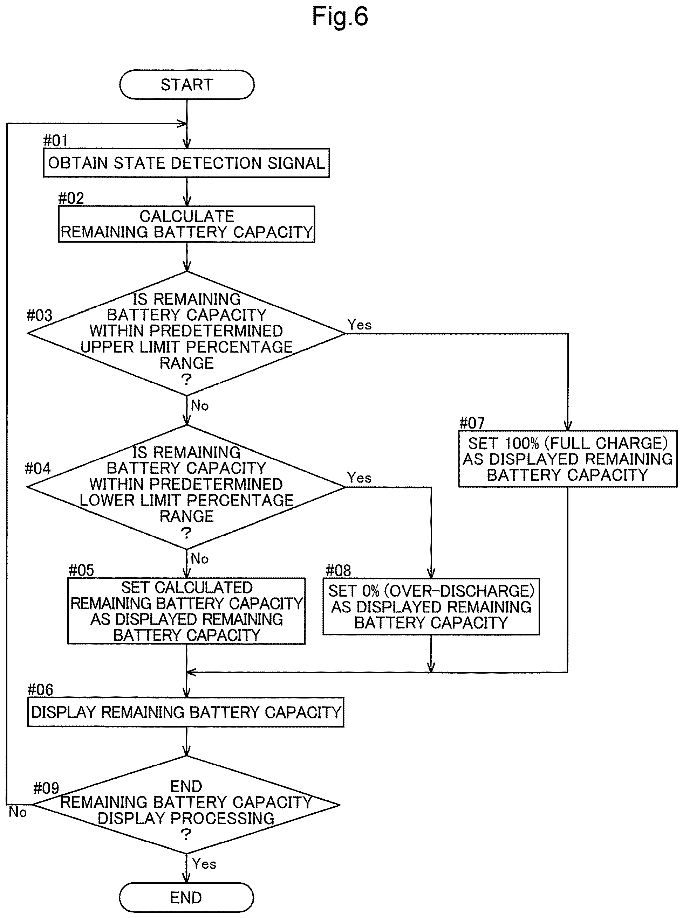

Next, the flow of remaining battery capacity display processing is described with reference to the flowchart in FIG. 6. First, the state detection signal is obtained from the battery state detection section 33 (#01). Based on the obtained state detection signal, the remaining battery capacity calculator 41a calculates a remaining battery capacity (#02).

The calculated remaining battery capacity is checked as to whether it is within the predetermined upper limit percentage range managed by the upper and lower limit percentage range manager 42 (#03). If the calculated remaining battery capacity is out of the predetermined upper limit percentage range (#03: No-branch), the calculated remaining battery capacity is also checked as to whether it is within the predetermined lower limit percentage range managed by the upper and lower limit percentage range manager 42 (#04). If the calculated remaining battery capacity is also out of the predetermined lower limit percentage range managed by the upper and lower limit percentage range manager 42 (#04: No-branch), the calculated remaining battery capacity is set as a displayed remaining battery capacity (#05) and is displayed in the remaining battery capacity display region 51a (#06).

If, in the check in step #03, the calculated remaining battery capacity is within the predetermined upper limit percentage range (#03: Yes-branch), 100% is set as a displayed remaining battery capacity (#07), and 100% (fully charged) is displayed as the remaining battery capacity in the remaining battery capacity display region 51a (#06). If, in the check in step #04, the calculated remaining battery capacity is within the predetermined lower limit percentage range (#04: Yes-branch), 0% is set as a displayed remaining battery capacity (#07), and 0% (over-discharge) is displayed as the remaining battery capacity in the remaining battery capacity display region 51a (#06).

Unless an instruction to end the remaining battery capacity display processing is received (#09: No-branch), the processing returns to step #01 and is repeated. Upon an end instruction being received (#09: Yes-branch), the remaining battery capacity display processing ends.

The control unit 40 in this embodiment also includes a travel control unit 44. The travel control unit 44 supplies a rotation control signal to the inverter 31 and a speed change control signal to the power transmission mechanism 20 based on an operation instruction from the user, thereby controlling the travel of the electric vehicle 1.

### Other Embodiments

(1) In the above embodiment, notification of overcharge is given if overcharge occurs based on the predetermined upper limit percentage range. In addition to this, a warning about prohibition of charging the travel battery 10, a warning about prohibition of regenerative charging, an instruction to prohibit charging, and/or an instruction to prohibit regenerative charging may also be issued. Further, in the above embodiment, notification of over-discharge is given if over-discharge occurs based on the predetermined lower limit percentage range. In addition to this, a warning of travel prohibition or switching to lowest-speed travel, an instruction to prohibit travel (travel prohibition operation), and/or an instruction to switch to lowest-speed travel may also be issued.
(2) The functional block diagram shown in FIG. 3 is mainly for the illustration purpose, and the functional units can be integrated or divided in any manner. The battery management unit 41, the notification control unit 43, and the travel control unit 44 may be distributed and connected to each other by a vehicle LAN or the like, rather than being built into one control unit 40.
(3) The arrangement of the display sections of the meter panel 51 shown in FIG. 4 is an example, and any display section may be added or omitted.
(4) Although a multi-purpose vehicle is described as the electric vehicle 1 in the above embodiment, the electric vehicle 1 may be any other electric vehicle, e.g., a general electric vehicle such as an electric four-, three-, or two-wheeled vehicle.

Note that the configurations disclosed in the above embodiments (including other embodiments, the same applies below) can be applied in combination with configurations disclosed in other embodiments, as long as no contradictions arise. Furthermore, the embodiments disclosed herein are examples. The embodiments of the present invention are not limited to these, and can be modified as appropriate without departing from the purpose of the present invention.

### Industrial Applicability

The remaining battery capacity display function according to the present invention can be applied to various electric vehicles.

### Description of Reference Signs

- 1:: Electric vehicle
- 10:: Travel battery
- 11:: Travel motor
- 13:: Power supply unit
- 14:: Charger
- 20:: Power transmission mechanism
- 21:: Transmission
- 31:: Inverter
- 32:: Regenerative charging unit
- 33:: Battery state detection section
- 40:: Control unit
- 41:: Battery management unit
- 41a:: Remaining battery capacity calculator
- 41b:: Charge controller
- 42:: Upper and lower limit percentage range manager
- 43:: Notification control unit
- 43a:: Display controller
- 43b:: Audio controller
- 51:: Meter panel (notification device)
- 51a:: Remaining battery capacity display region

## Claims

1. An electric vehicle configured to travel with use of power from a travel motor (11), the electric vehicle comprising:
a rechargeable travel battery (10) configured to supply electric power to the travel motor (11);
a remaining battery capacity calculator (41a) configured to calculate a remaining battery capacity of the travel battery (10);
a notification device (51, 52) configured to give notification of the remaining battery capacity; and
a notification control unit (43) configured to control the notification of the notification device (51, 52),
wherein if the remaining battery capacity calculated by the remaining battery capacity calculator (41a) is within a predetermined upper limit percentage range, the notification device (51, 52) gives notification that the remaining battery capacity is 100% regardless of whether the electric vehicle is charging or traveling, and if the remaining battery capacity calculated by the remaining battery capacity calculator (41a) is within a predetermined lower limit percentage range, the notification device (51, 52) gives notification that the remaining battery capacity is 0% regardless of whether the electric vehicle is charging or traveling.

2. The electric vehicle according to claim 1,
wherein if the remaining battery capacity calculated by the remaining battery capacity calculator (41a) is between the predetermined upper limit percentage range and the predetermined lower limit percentage range, the notification device (51, 52) gives notification of the remaining battery capacity calculated by the remaining battery capacity calculator (41a).

3. The electric vehicle according to claim 1 or 2,
wherein if the remaining battery capacity is within the predetermined upper limit percentage range, an operation related to prohibiting charging of the travel battery (10) is executed.

4. The electric vehicle according to any one of claims 1 to 3,
wherein if the remaining battery capacity is within the predetermined lower limit percentage range, an operation related to prohibiting traveling is executed.

5. The electric vehicle according to any one of claims 1 to 4,
wherein at least either the predetermined upper limit percentage range or the predetermined lower limit percentage range is changeable by a driver.
